(19)

Europäisches Patentamt

European Patent Office

Office européen des brevets

(11) **EP 4 578 724 A1**

(12) **EUROPEAN PATENT APPLICATION**

(43) Date of publication:
**02.07.2025 Bulletin 2025/27**

(21) Application number: **24171932.7**

(22) Date of filing: **23.04.2024**

(51) International Patent Classification (IPC):
*B60L 58/27* (2019.01)     *B60L 1/00* (2006.01)
*H01M 10/48* (2006.01)     *H01M 10/613* (2014.01)
*H01M 10/63* (2014.01)

(52) Cooperative Patent Classification (CPC):
**H01M 10/486; B60L 58/27; H01M 10/48;**
**H01M 10/613; H01M 10/615; H01M 10/625;**
**H01M 10/63; H01M 10/633; H01M 10/635;**
H01M 2220/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.12.2023 KR 20230196394**

(71) Applicant: **Samsung SDI Co., Ltd.**
**Yongin-si, Gyeonggi-do 17084 (KR)**

(72) Inventors:
• **Kim, Min Su**
  **16678 Suwon-si, Gyeonggi-do (KR)**
• **Kim, Tae Ho**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **APPARATUS AND METHOD FOR CONTROLLING INNER CONDITION ENVIRONMENT OF BATTERY PACK**

(57)     The present disclosure relates to an apparatus and method for controlling an internal environment of a battery pack (100) and is directed to providing a method for effectively controlling an internal environment of a battery pack (100) by accurately calculating a dew point based on an internal temperature and humidity of a battery pack (100) and performing cooling or heating according to a change in current temperature to prevent generation of dew condensation and minimize damage due to the humidity. To this end, the present disclosure includes a temperature sensor (241) which measures an internal temperature of a battery pack (100), a humidity sensor (242) which measures an internal humidity of the battery pack (100), a heating apparatus (280) which increases the internal temperature of the battery pack (100), and a processor (210) which controls an internal environment of the battery pack (100) by calculating a dew point based on the measured temperature and humidity, setting a threshold value based on the dew point, determining whether a current temperature reaches the threshold value according to changes in the temperature and the humidity, and applying a control signal to the heating apparatus (280) such that the current temperature does not reach the threshold value.

FIG. 5

```
                    START
                      │
      ┌───────────────▼───────────────┐
      │ MEASURE TEMPERATURE AND HUMIDITY │──── S310
      └───────────────┬───────────────┘
      ┌───────────────▼───────────────┐
      │ CALCULATE DEW POINT AND THRESHOLD VALUE │──── S320
      └───────────────┬───────────────┘
                      │
NO          ◇ HAS THRESHOLD VALUE BEEN REACHED? ◇──── S330
      │               │ YES
      │  ┌────────────▼────────────┐
      │  │ CONTROL HEATING (PWM CONTROL) │──── S340
      │  └────────────┬────────────┘
      │  ┌────────────▼────────────┐
      │  │    MEASURE TEMPERATURE    │──── S350
      │  └────────────┬────────────┘
NO          ◇ TEMPERATURE CHANGE > SET VALUE? ◇──── S360
                      │ YES
         ┌────────────▼────────────┐
         │       STOP HEATING        │──── S370
         └────────────┬────────────┘
                      END
```

**Description**

BACKGROUND

1. Field

Embodiments of the present disclosure relate to an apparatus and method for controlling an internal environment of a battery pack, which may control a temperature according to an amount of water vapor in a battery pack.

2. Description of the Related Art

A secondary battery is a battery that can be charged and discharged unlike a primary battery that cannot be recharged. Low-capacity secondary batteries are used in small portable electronic devices such as smartphones, feature phones, notebook computers, digital cameras, and camcorders, and high-capacity secondary batteries are widely used as driving power sources and power storage batteries for motors in hybrid and electric vehicles. Such a secondary battery includes an electrode assembly provided with a positive electrode and a negative electrode, a case for accommodating the electrode assembly, electrode terminals connected to the electrode assembly, and the like.

The secondary battery is charged with a charge current applied from the outside and outputs a discharge current to supply the discharge current to a load.

Since such a secondary battery is very sensitive to internal environment conditions, the performance of the secondary battery can be seriously affected by changes in humidity and temperature. In particular, when the secondary battery operates in high-humidity environments, its lifetime can be shortened, and safety problems such as an unstable voltage, overheating, and fire can occur.

In addition, as the internal humidity of the secondary battery increases, generation of arc increases, thereby degrading system stability and causing welding problems. These phenomena can cause the performance degradation of the secondary battery and a system on which the secondary battery is mounted.

In addition, when the secondary battery is formed in a package type, since an amount of water vapor in the package is fixed in a manufacturing operation, it is difficult to externally control the amount of water vapor.

Accordingly, a method of solving a humidity problem by controlling an internal environment of the secondary battery package is required.

The information described in the background technology of this disclosure is only for facilitating understanding of the background of the present disclosure and therefore may also include information that does not constitute the related art.

SUMMARY

The present disclosure is directed to providing an apparatus and method for controlling an internal environment of a battery pack by accurately calculating a dew point based on an internal temperature and humidity of a battery pack to reduce or prevent generation of dew condensation and minimize damage due to the humidity.

However, technical objectives to be solved by the present disclosure are not limited to the above-described objectives, and other objectives which are not described above will be clearly understood by those skilled in the art from the following description of the present disclosure.

According to an aspect of the present disclosure, there is provided an apparatus for controlling an internal environment of a battery pack, the apparatus including a temperature sensor which measures an internal temperature of a battery pack, a humidity sensor which measures an internal humidity of the battery pack, a heating apparatus which increases the internal temperature of the battery pack, and a processor which controls an internal environment of the battery pack by calculating a dew point based on the measured temperature and humidity, setting a threshold value based on the dew point, determining whether a current temperature reaches the threshold value according to changes in the temperature and the humidity, and applying a control signal to the heating apparatus so that the current temperature does not reach the threshold value.

In embodiments, when a difference between the current temperature and the dew point reaches a set temperature, the processor may control the heating apparatus.

In embodiments, the processor may set the threshold value by adding a temperature constant to the dew point.

In embodiments, the apparatus may further comprise a cooling apparatus which decreases the internal temperature of the battery pack, wherein, when the current temperature is greater than or equal to a set temperature, the processor determines that the battery pack is overheated and controls the cooling apparatus.

In embodiments, the processor may control the internal environment of the battery pack by generating the control signal according to a difference between the current temperature and the threshold value to vary an amount of heating.

In embodiments, the processor may control an output of the heating apparatus to increase as the current temperature approaches the threshold value; and the output of the heating apparatus to decrease as a difference between the current temperature and the threshold value increases.

In embodiments, the processor may set a duty cycle based on the current temperature, the dew point, and the threshold value; generate the control signal in a pulse width modulation (PWM) control method according to the duty cycle; and apply the control signal to the heating apparatus.

In embodiments, the processor may set the duty cycle by dividing a value of the threshold value minus the dew point by a value of the current temperature minus the dew point; and multiplying a divided value by a maximum value of the duty cycle.

In embodiments, when the current temperature reaches the threshold value, the processor may set the duty cycle to a maximum value.

Further provided is a method of controlling an internal environment of a battery pack, the method comprising measuring, by a temperature sensor, an internal temperature of a battery pack and measuring, by a humidity sensor, an internal humidity of the battery pack; calculating, by a processor, a dew point based on the measured temperature and humidity; setting, by the processor, a threshold value based on the dew point; determining, by the processor, whether a current temperature reaches the threshold value according to changes in the temperature and the humidity; and controlling, by the processor, an internal environment of the battery pack by applying a control signal to the heating apparatus so that the temperature does not reach the threshold value.

In embodiments, in the step of controlling of the internal environment of the battery pack, when a difference between the temperature and the dew point reaches a set temperature, the processor may control the heating apparatus.

In embodiments, in the step of setting of the threshold value, the processor may set the threshold value by adding a temperature constant to the dew point.

In embodiments, the controlling of the internal environment of the battery pack may include controlling a cooling apparatus by determining that the battery pack is overheated when the current temperature is greater than or equal to a set temperature.

In embodiments, the step of controlling of the internal environment of the battery pack includes controlling the internal environment of the battery pack by generating the control signal according to a difference between the current temperature and the threshold value to vary an amount of heating.

In embodiments, in the step of controlling of the internal environment of the battery pack, the processor may control an output of the heating apparatus to increase as the current temperature approaches the threshold value; and the output of the heating apparatus to decrease as a difference between the current temperature and the threshold value increases.

In embodiments, in the step of controlling of the internal environment of the battery pack, the processor may set a duty cycle based on the current temperature, the dew point, and the threshold value; generate the control signal in a pulse width modulation (PWM) control method according to the duty cycle; and apply the control signal to the heating apparatus.

In embodiments, in the step of controlling of the internal environment of the battery pack, the processor may set the duty cycle by dividing a value of the threshold value minus the dew point by a value of the current temperature minus the dew point; and multiplying a divided value by a maximum value of the duty cycle.

In embodiments, in the step of controlling of the internal environment of the battery pack, when the current temperature reaches the threshold value, the processor sets the duty cycle to a maximum value.

Further provided is a method of controlling an internal environment of a battery pack, the method comprising measuring, by humidity sensors of an internal environment control apparatus, humidity of each section in a battery pack divided into a plurality of sections; receiving, by the internal environment control apparatus, information on the plurality of sections and humidity values of the sections and generating a learning model based on the humidity values for locations of the sections;

repeatedly performing, by the internal environment control apparatus, learning by reflecting a reward for the locations of the sections and a new state on the basis of the learning model; and determining, by the internal environment control apparatus, locations of the humidity sensors according to a result of the learning.

In embodiments, the step of generating of the learning model includes defining an agent for determining the location of the humidity sensor and defining a reward function for calculating a reward based on quality of the humidity values of the plurality of sections; and generating the learning model based on a deep reinforcement leaning (DRL) for determining an installation location of the humidity sensor.

BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIGS. 1A and 1B are views illustrating an example of a battery pack according to one or more embodiments of the present disclosure;

FIG. 2 is a view illustrating an example in which a battery pack is installed on a vehicle body according to one or more embodiment2 of the present disclosure;

FIG. 3 is a block diagram illustrating an apparatus for controlling an internal environment of a battery pack according to one or more embodiments of the present disclosure;

FIG. 4 is a graph showing a saturated water vapor curve of the apparatus for controlling an internal environment of a battery pack according to one or more embodiments of the present disclosure;

FIG. 5 is a flowchart illustrating a method of controlling the apparatus for controlling an internal environment of a battery pack according to a dew point according to one or more embodiments of the present disclosure;

FIG. 6 is a flowchart illustrating a method of controlling an internal environment of the apparatus for controlling an internal environment of the battery pack according to one or more embodiments of the present disclosure; and

FIG. 7 illustrates a flow for the location optimization of a sensor of the apparatus for controlling an internal environment of a battery pack according to one or more embodiments of the present disclosure.

## DETAILED DESCRIPTION OF EXEMPLARY EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

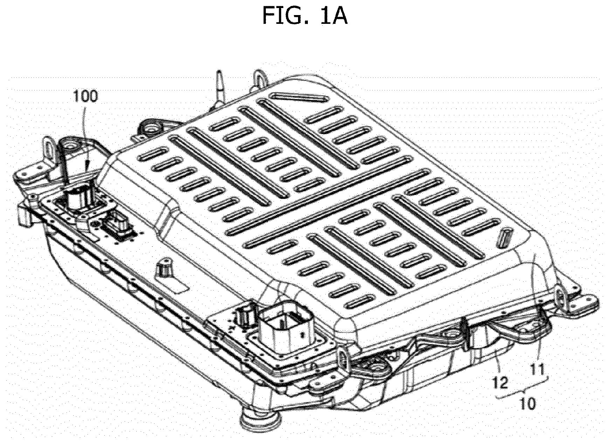

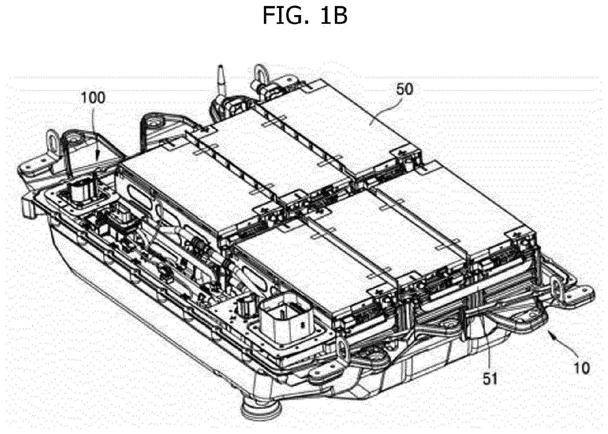

FIGS. 1A and 1B are views illustrating an example of a battery pack according to one or more embodiments of the present disclosure.

A battery pack 100 may include a plurality of battery modules 50 and a housing 10 for accommodating the plurality of battery modules 50. For example, the housing 10 may include first and second housings 11 and 12 which are coupled to face each other with the plurality of battery modules 50 interposed therebetween. The plurality of battery modules 50 may be electrically connected to each other using busbars 51, and the plurality of battery modules 50 may be electrically connected to each other in a series/parallel or series-parallel mixed manner and may obtain a desired electrical output.

The battery pack 100 may include one or more battery modules and a pack housing in which an accommodation space for accommodating one or more battery modules 50 is formed.

The battery module 50 may include a plurality of battery cells and a module housing. The battery cells may be accommodated in the module housing in a stack type. The battery cell may include a positive electrode lead and a negative electrode lead. The battery cell may be used in a cylindrical type, a prismatic type, or a pouch type according to a battery type.

One cell stack, in which cells are stacked, instead of the battery module may constitute one module in the battery pack 100. The cell stack may be accommodated in the accommodation space of the pack housing or in an accommodation space partitioned by a frame, partition, or the like.

The battery cell may generate a large amount of heat during charging/discharging. The generated heat is accumulated in the battery cell and may accelerate the degradation of the battery cell. Accordingly, the battery pack further may include a cooling member to suppress the degradation of the battery cell. The cooling member may be provided under the accommodation space in which the battery cell is accommodated, but is not limited thereto, and its placement may vary, for example, it may be provided on an upper portion or a side surface of the accommodation space according to the battery pack.

Exhaust gases generated inside the battery cell under abnormal operating conditions known as thermal runaway or a thermal event of the battery cell may be discharged to the outside of the battery cell. The battery pack or the battery module may include an exhaust port and the like for discharging the exhaust gases to prevent damage to the battery pack or the module by the exhaust gases.

The battery pack may include a battery and a battery management system (BMS) for managing the battery. The BMS may include a detection apparatus, a balancing apparatus, and a control apparatus. The battery module may include a plurality of cells connected to each other in series or parallel. The battery modules may be connected to each other in series or parallel.

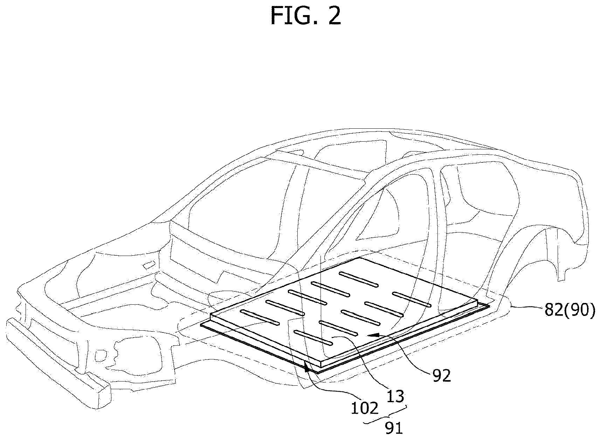

FIG. 2 is a view illustrating an example in which a battery pack is installed on a vehicle body 81 according to one or more embodiments of the present disclosure;

In FIG. 2, a battery pack 91 may include a battery pack cover 13 which is a portion of a vehicle underbody 92 and a pack frame 10s disposed under the vehicle underbody 92. The pack frame 10s and the battery pack cover 13 may have a structure integrally formed with a vehicle bottom portion 82.

The vehicle underbody 92 may separate the outside from the inside of a vehicle 99, and the pack frame 102 may be disposed outside the vehicle 99.

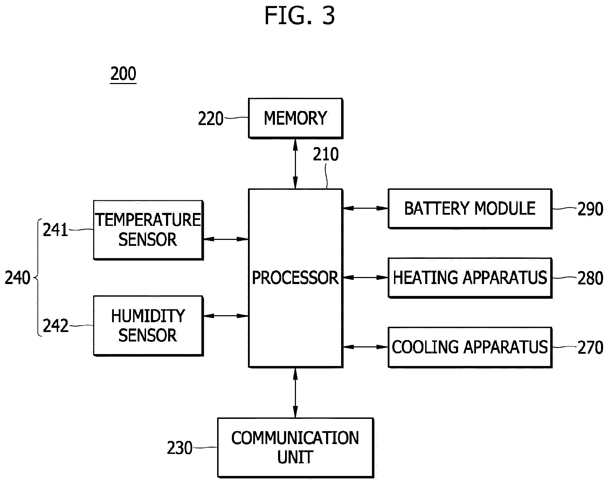

FIG. 3 is a block diagram illustrating an apparatus for controlling an internal environment of a battery pack according to one or more embodiments of the present disclosure.

Referring to FIG. 3, an apparatus (hereinafter, control apparatus) 200 for controlling an internal environment of a battery pack according to one or more embodiments of the present disclosure may include a memory 220, a communication unit 230, a sensor 240, a cooling apparatus 270, a heating apparatus 280, a battery module 290, and a processor 210.

The memory 220 may store at least one of temperature data and humidity data input from the sensor 240, set data for processing data, data for calculating a dew point, data for controlling cooling and heating, data for setting a duty cycle of a pulse width modulation (PWM) control signal, data for controlling the battery module 290, reference data for determining a state of the battery module 290, data for a state of charge (SOC) of the battery module 290, and data generated during calculation of the processor 210.

The memory 220 may include data about at least one of a data processing algorithm, a dew point calculation algorithm, a cooling and heating control algorithm, a control signal generation algorithm, a duty cycle set algorithm, and a battery diagnosis algorithm.

The memory 220 may include a storage medium such as a random-access memory (RAM), a non-volatile memory such as a read-only memory (ROM) or an electrically erasable programmable ROM (EEPROM), or a flash memory.

The communication unit 230 may allow data transmission and reception between the processor 210, the memory 220, the battery module 290, the sensor 240, the heating apparatus 280, and the cooling apparatus 270. In addition, the communication unit 230 may allow data transmission and reception between main processors (not shown) provided in systems of vehicles or the like including the processor 210 and the control apparatus 200.

For example, the communication unit 230 may include a controller area network (CAN) communication driver or local interconnect network (LIN) communication driver and allow data transmission and reception. In addition, the communication unit 230 may allow data transmission and reception through serial communication or parallel communication.

The sensor 240 may include a temperature sensor 241 and a humidity sensor 242 and transmit measured data to the processor 210.

The temperature sensor 241 may be provided as a plurality of temperature sensors 241 and may measure a temperature of the battery module 290 and an internal temperature of the battery pack.

The humidity sensor 242 may be provided as a plurality of humidity sensors 242 and may measure an internal humidity of the battery pack.

The battery module 290 may be charged with a charge current and output a predetermined amount of discharge current. The battery module 290 may include a plurality of battery cells. The plurality of battery cells may be connected to each other in series or parallel.

The heating apparatus 280 may include a heater using a heating line.

A cooling unit using a cooling water circulation method or semiconductor cooling method may be used as the cooling apparatus 270.

The processor 210 may monitor states of the plurality of battery cells provided in the battery module 290, determine a SOC, and calculate a state of health (SOH).

The processor 210 may control charge and discharge of the battery module 290 and the plurality of battery cells, control temperatures of the plurality of battery cells, and perform balancing control.

The processor 210 may perform at least one protection function among an over-discharge protection function, an over-charge protection function, an overcurrent flow protection function, a short circuit protection function, and a fire extinguishing function on the basis of a result of the state monitoring. In addition, the processor 210 may detect failures of the battery module 290 and the plurality of battery cells.

Any one of a battery management system (BMS), a battery pack control module (BPCM), a central processing unit (CPU), an electronic control unit (ECU), and a micro controller unit (MCU) may be used as the processor 210.

The processor 210 may determine states of the battery cell based on t data input from the temperature sensor 241 and the humidity sensor 242.

In addition, the processor 210 may analyze a state of an internal environment of the battery pack and calculate a dew point in the battery pack based on the data input from the temperature sensor 241 and the humidity sensor 242.

The processor 210 may control the heating apparatus 280 or the cooling apparatus 270 on the basis of the dew point to control an internal temperature of the battery pack. The processor 210 may control an internal relative humidity of the battery pack through temperature control and perform control so that the relative humidity does not reach the dew point.

The processor 210 may calculate the dew point and calculate an absolute amount of water vapor in the battery pack.

The processor 210 may compare the dew point calculated according to a current temperature and a current humidity with a threshold value to control an environment in the battery pack.

The processor 210 may use a set threshold value or set a threshold value for the dew point based on the absolute amount of water vapor. For example, the threshold value may be set to a value greater than the dew point by "a" degrees. In this case, "a" may be set to a specific temperature constant.

The processor 210 may control the heating apparatus 280 and the cooling apparatus 270 on the basis of the dew point and the threshold value. The processor 210 may set a duty cycle for PWM control based on the current temperature, the dew point, and the threshold value.

The processor 210 may control an amount of heating or cooling by variously controlling the duty cycle based on a ratio of a difference between the current temperature and the dew point to a difference between the threshold value and the dew point.

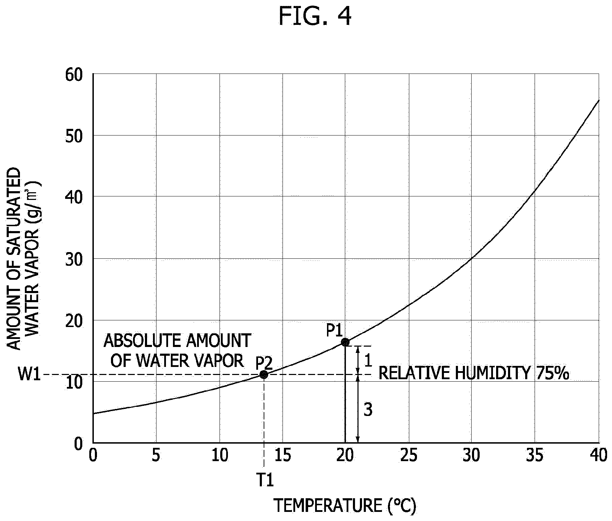

FIG. 4 is a graph showing a saturated water vapor curve of the apparatus for controlling an internal environment of a battery pack according to one or more embodiments of the present disclosure.

An amount of saturated water vapor according to a temperature may be changed as illustrated in FIG. 4.

If an internal temperature of the battery pack measured by the temperature sensor 241 is 20 degrees Celsius, an amount of saturated water vapor is determined as a first point P1.

In this case, if a humidity (i.e. relative humidity) measured by the humidity sensor 242 is 75%, the processor 210 may determine that a first saturated water vapor amount W 1 at a point (1:3) which is 75% of a saturated water vapor amount at the first point P1, i.e. second point P2, is a current absolute water vapor amount.

The processor 210 may calculate a first temperature T1 at the second point P2 at which an amount of water vapor is W1 as a dew point from the saturated water vapor curve. For example, a dew point may be about 13 degrees. If an internal temperature of the battery pack changes, the processor 210 may recalculate a dew point.

In embodiments where temperatures and humidities are measured at a plurality of points, the processor 210 may calculate an average value based on dew points calculated at the plurality of points and set the average value as a dew point. In some embodiments, a maximum value among a plurality of dew points may be set as a dew point. In addition, if dew points are calculated at a plurality of points, a maximum value and a minimum value among the plurality of dew points may be set.

The processor 210 may compare a threshold value set based on a dew point with a current temperature to control the heating apparatus 280. In addition, the processor 210 may determine an overheated state when the current temperature reaches a set temperature, and control the cooling apparatus 270.

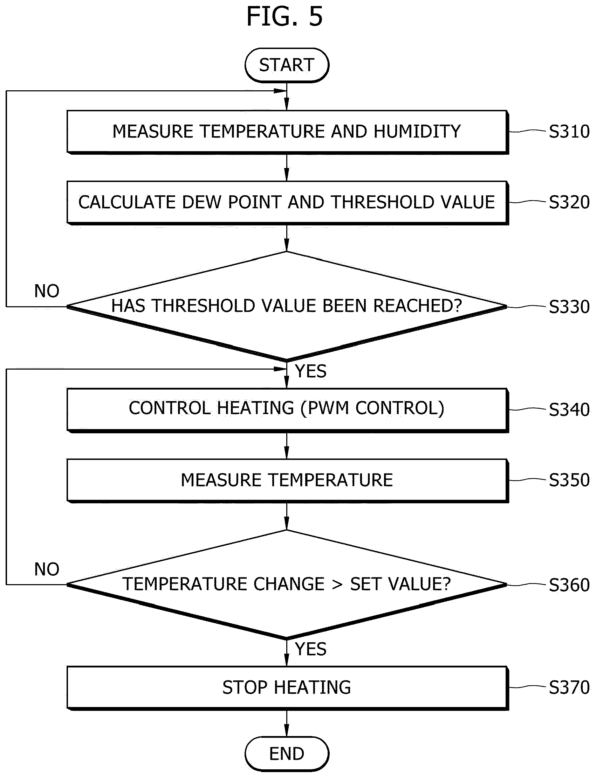

FIG. 5 is a flowchart illustrating a method of controlling the apparatus for controlling an internal environment of a battery pack according to a dew point according to one or more embodiments of the present disclosure.

Referring to FIG. 5, the control apparatus 200 may control an internal environment of the battery pack on the basis of data input from the temperature sensor 241 and the humidity sensor 242.

The temperature sensor 241 and the humidity sensor 242 may measure a temperature and a humidity (relative humidity) at their installation locations and apply the temperature and the humidity (relative humidity) measurements to the processor 210 (S310).

The processor 210 may accumulate and store temperature data and humidity data in the memory 220.

The processor 210 may calculate a dew point Td based on the temperature and the humidity and calculates a threshold value T_threshold based on the dew point (S320). The processor 210 may set a value obtained by adding a temperature constant "a" to the dew point Td as the threshold value T_threshold.

The processor 210 may compare a current temperature T_current with the threshold value T_threshold, and if the current temperature T_current reaches the threshold value T_threshold (S330), the processor 210 may control the heating apparatus 280 (S340).

The processor 210 may compare the current temperature T_current with the threshold value T_threshold, and before the current temperature reaches the dew point Td, the processor 210 may determine that the internal temperature of the battery pack is likely to reach the dew point and perform heating control.

The processor 210 may control heating by applying a PWM control signal to the heating apparatus 280.

If a temperature is measured by the temperature sensor 241 (S350), the processor 210 may determine whether a change in temperature is greater than a set value (S360), and if the change in temperature is greater than the set value, the processor 210 may stop the heating (S370).

The processor 210 may control a relative humidity to decrease as an internal temperature of the battery pack increases.

Meanwhile, if the processor 210 controls the heating apparatus 280 in order to increase a temperature, and an internal temperature of the battery pack increases to a set temperature or more, the processor 210 may control the cooling apparatus 270 to decrease the temperature.

Even if a power source of an apparatus or system in which the battery pack is installed is turned off, since an internal temperature of the battery pack may also decrease and reach a dew point due to an external environment, the processor 210 may control the internal temperature of the battery pack using the battery module 290.

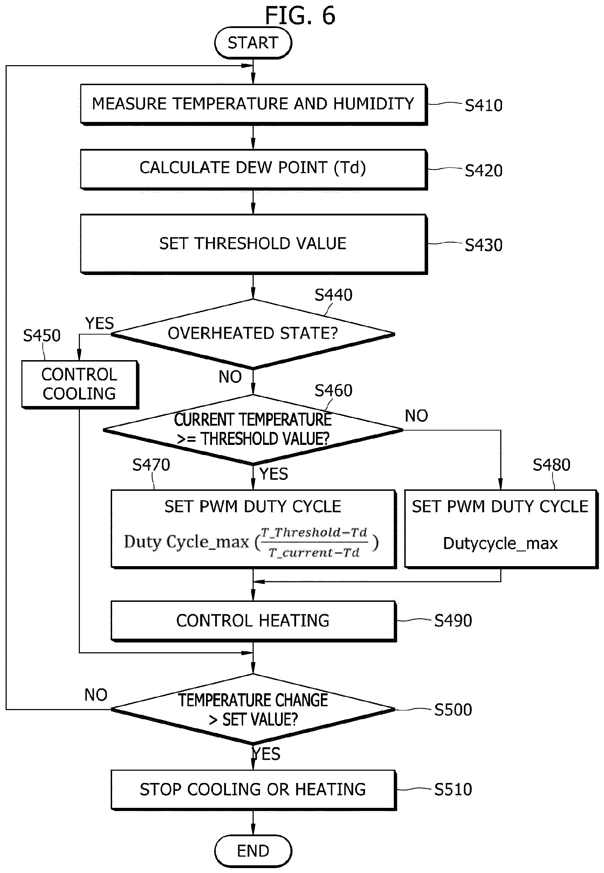

FIG. 6 is a flowchart illustrating a method of controlling an internal environment of the apparatus for controlling an internal environment of the battery pack according to one or more embodiments of the present disclosure.

Referring to FIG. 6, if a temperature and a humidity are measured by the temperature sensor 241 and the humidity sensor 242, respectively, the processor 210 may receive data (S410) and may calculate a dew point Td (S420).

In addition, if the plurality of temperature sensors and the plurality of humidity sensors are provided, the processor 210 may set a maximum value Td_max and a minimum value Td_min among dew points calculated from the plurality of temperature sensors and the plurality of humidity sensors. When the plurality of dew points is calculated, the processor 210 may set an average value thereof as the dew point Td. In some embodiments, the maximum value among the plurality of dew points may be set as the dew point Td.

The processor 210 may set a value obtained by adding a temperature constant "a" to the dew point Td as a threshold value T_threshold (S430). The temperature constant "a" may be changed depending on a setting.

The processor 210 may compare a current temperature with a set temperature and may determine whether an overheated state is present (S440). If the overheated state is determined, the processor 210 may operate the cooling apparatus 270 to perform cooling control (S450).

The processor 210 may set a duty cycle of a PWM control signal for the cooling control.

If a current temperature T_current is greater than the set temperature, the processor 210 may control cooling by setting the duty cycle to be greater as a difference between the current temperature T_current and the set temperature increases and to be smaller as the difference between the current temperature T_current and the set temperature decreases.

In addition, the processor 210 may compare the current temperature T_current with the threshold value T_threshold and may determine whether the current temperature is smaller than or equal to the threshold value T_threshold (S460).

If the current temperature T_current is smaller than or equal to the threshold value T_threshold, the processor 210 may set the duty cycle for PWM control to a maximum value (S480).

The processor 210 may perform control so that the current temperature T_current does not reach the threshold value T_threshold, and in some embodiments, if the current temperature T_current is smaller than or equal to the threshold value T_threshold, the processor 210 may sets the duty cycle to a maximum value Duty Cycle_max and may perform heating control so that the current temperature T_current increases.

The processor 210 may control the heating apparatus 280 according to the set duty cycle so that the heating apparatus 280 performs control with a maximum amount of heating (S490).

Meanwhile, if the current temperature T_current is greater than the threshold value T_threshold, the processor 210 may set the duty cycle within a predetermined temperature range (S470).

In a state in which the current temperature T_current does not reach the threshold value T_threshold, if the current temperature T_current decreases, the processor 210 may set a duty cycle.

The processor 210 may calculate the duty cycle using, for example, Equation 1 below.

[Equation 1]

$$\text{Duty Cycle} = \text{Duty Cycle\_max} \left( \frac{T\_threshold - Td}{T\_current - Td} \right)$$

In this case, Duty cycle_max may be a maximum value of a settable duty cycle, Td may be a dew point, T_threshold may be a threshold value, T_current may be a current temperature.

The processor 210 may calculate the duty cycle by dividing a value of the threshold value T_threshold minus the dew point Td by a value of the current temperature T_current minus the dew point Td and multiplying the divided value by the maximum value Dutycycle_max of the duty cycle.

Accordingly, the processor 210 may change the duty cycle of the PWM control according to a difference between the current temperature T_current and the threshold value T_threshold. In embodiments, the processor 210 may change the duty cycle of the PWM control according to a ratio of a difference between the threshold value T_threshold and the dew point Td to a difference between the current temperature T_current and the dew point Td.

As a value of the duty cycle increases, an output of the heating apparatus 280 may increase. The processor 210 may control the heating apparatus 280 according to a set duty cycle to perform heating control to increase an internal temperature of the battery pack (S490).

Accordingly, as the current temperature T_current approaches the dew point Td or the threshold value T_threshold, the processor 210 may reinforce heating, and as the difference between the current temperature T_current and the dew point Td or the threshold value T_threshold increases, the processor 210 may reduce an amount of heating.

As the battery pack is formed into a package in a manufacturing operation, an amount of water vapor in the battery pack may be determined in the manufacturing operation. However, although waterproof sealing is applied to the battery pack, a gap may be generated due to an environmental change such as internal heating, a humidity change, or a temperature difference between internal and external temperatures, and thus an absolute amount of internal water vapor may change due to a cause such as moisture penetration or the like.

Accordingly, the processor 210 may set the threshold value T_threshold from the calculated dew point Td and perform heating control so that dew condensation is not generated in the battery pack on the basis of the threshold value T_threshold and the current temperature T_current.

In some embodiments, since the dew point may change according to a measurement location and a temperature of the sensor 240, and an error may also occur in the threshold value of the preset dew point, the processor 210 may control the internal environment of the battery pack on the basis of the current temperature T_current, the threshold value T_threshold, and the dew point Td.

The processor 210 may perform heating control on the basis of the current temperature T_current, the dew point Td, and the threshold value T_threshold, and perform cooling control on the basis of a current temperature and a set temperature, and if a temperature change by the heating control or cooling control is greater than or equal to a set value (S500), the heating control or cooling control being performed may be stopped (S510).

Since the processor 210 performs heating or cooling through a PWM control, the heating may be controlled by subdividing an amount of heating according to a difference between a current temperature and a dew point (or a threshold value). In addition, in an overheating state in which a current temperature is greater than a set temperature, the processor 210 may control cooling by subdividing an amount of cooling according to a difference between the current temperature and a set temperature.

Accordingly, the processor 210 can control an internal environment of the battery pack using only a small amount of energy by preventing a sudden change in temperature and precisely controlling cooling or heating.

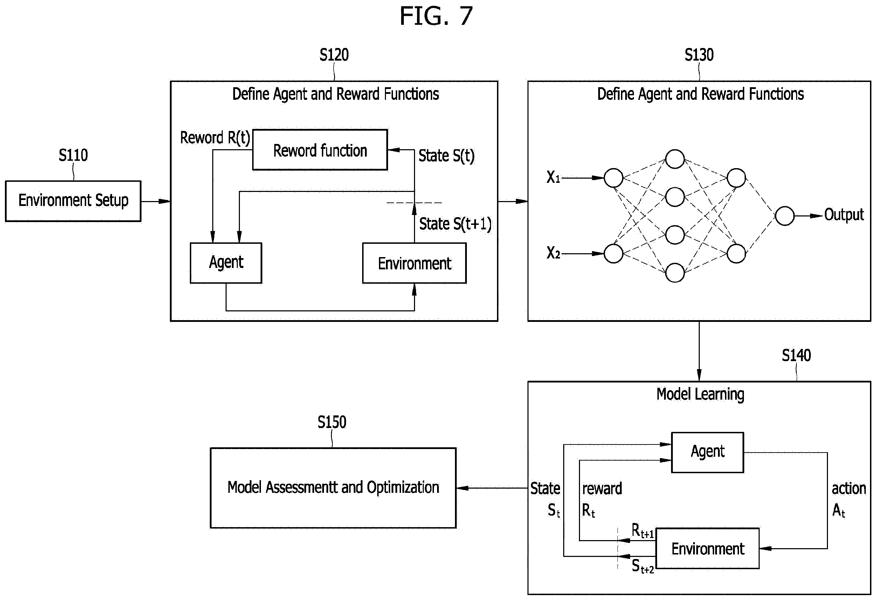

FIG. 7 illustrates a flow for the location optimization of a sensor of the apparatus for controlling an internal environment of a battery pack according to one or more embodiments of the present disclosure.

Referring to FIG. 7, in the control apparatus 200, e.g. of Fig. 3, an installation location of the sensor 240 may be optimized in a drawing operation.

In some embodiments, since an amount of water vapor of the battery pack is related to humidity, it may be preferable to optimize locations of the humidity sensor 242.

The control apparatus 200 may receive a set value for a manufacturing environment of the battery pack (S110) and may define an agent and a reward function based on input environment data (S 120).

The environment data may include information about an inside space of the battery pack and may include location information of each section in the battery pack divided into a plurality of sections. In addition, the environment data may include humidity values in each section measured by the humidity sensors 242 in the battery pack divided into the plurality of sections.

In some embodiments, the agent may select the location of the sensor. If the location of the sensor is determined, the reward function may be calculated based on an amount or quality of information at the corresponding location.

The control apparatus 200 may perform modeling on the location of the humidity sensor 242 on the basis of machine learning or deep learning (S130).

The agent may perform learning through a deep reinforcement learning (DRL) to optimize the location of the humidity sensor. The DRL is a deep neural network in which the agent maximizes a reward by interacting with an environment. The type of neural network used for learning is exemplary and may be changed.

The control apparatus 200 may perform learning based on a generated model (S140). The agent may select an action in a measured state, and may observe a reward according to a result thereof and a new state, and repeatedly may perform learning using the same. In embodiments, the agent may learn the location of the sensor in the battery pack on the basis of a deep Q-Network.

After the learning is completed, the control apparatus 200 may determine the location of the humidity sensor based on a result thereof (S 150). A result value is a value that reflects the reward or weighted value according to the learning, and the humidity sensor may be disposed at the location at which the value is greatest.

Since the location of the sensor may affect an accuracy of a measured value of the humidity sensor 242, the location of the sensor may be optimized as described above. The control apparatus 200 may optimize and arrange a location of the temperature sensor 241 as well as the humidity sensor 242.

As secondary batteries may be very sensitive to internal environment conditions and changes thereto, the performance of the secondary battery can be seriously affected by changes in internal environmental condition, for example, humidity and temperature. In particular, if the secondary battery operates in high-humidity environments, its lifetime can be shortened, and safety problems such as an unstable voltage, overheating and fire can occur.

In addition, if the secondary battery is formed in a package type, since an amount of water vapor in the package is fixed in a manufacturing operation, it is difficult to externally control the amount of water vapor.

Accordingly, a method of solving a humidity problem by controlling an internal environment of the secondary battery package is desirable. Further, the apparatus and the method for controlling an internal environment of a battery pack of the present disclosure can effectively control the internal environment of the battery pack by monitoring a temperature and a humidity in real time, calculating a dew point based on accurate sensor data, and performing heating based on the dew point. In addition, embodiments of the present disclosure can subdivide and precisely control heating or cooling through PWM control, improve the stability of the battery pack, increase a SOH, and improve the reliability of the system on which the battery pack is mounted.

According to the present disclosure, an internal environment of a battery pack can be effectively controlled by monitoring a temperature and a humidity in real time, calculating a dew point, and performing heating based on the dew point.

According to embodiments of the present disclosure, heating can be subdivided and precisely controlled through PWM control.

According to embodiments of the present disclosure, the generation of dew condensation can be prevented through temperature control, thus arc formation can be prevented, and welding problems due to humidity can be solved.

According to embodiments of the present disclosure, the stability of a battery pack can be improved, lifetime can be increased, and the reliability of the system on which the battery pack is mounted can be improved.

However, effects which can be achieved through the present disclosure are not limited to the above-described effects, and other effects which are not described above will be clearly understood by those skilled in the art from the above description of the present disclosure.

Although the present disclosure has been described above with reference to limited specific embodiments and drawings, the present disclosure is not limited thereto, and various modifications and changes may be made by those skilled in the art.

The present disclosure described in this specification can be implemented through, for example, a method, a process, an apparatus, a software program, a data stream, or a signal. Even if the present disclosure is described as being implemented in only a single form (for example, as a method), the described features may be implemented in another form (for example, as an apparatus or program). The apparatus may be implemented using proper hardware, software, firmware, or the like. For example, the method may be implemented in an apparatus such as a processor or the like which is generally referred to as a processing device including a computer, a microprocessor, an integrated circuit, or a programmable logic device. The processor also includes a communication device such as a computer, a cell phone, a portable/personal digital assistant (PDA) terminal, or another device which facilitate communication of information between end users.

In embodiments, the processor may be implemented as a CPU or system on chip (SoC), may drive an operating system or application to control a plurality of hardware or software components connected to the processor, and may perform processing and calculation on various types of data. The processor may be configured to execute at least one command stored in the memory (not shown) and store result data of the execution in the memory.

**Claims**

1. An apparatus for controlling an internal environment of a battery pack (100), the apparatus comprising:

   a temperature sensor (241) configured to measure an internal temperature of the battery pack (100);
   a humidity sensor (242) configured to measure an internal humidity of the battery pack (100);
   a heating apparatus (280) configured to increase the internal temperature of the battery pack (100); and
   a processor (210) configured to:

      control the internal environment of the battery pack (100) by calculating a dew point based on the measured temperature and humidity,

set a threshold value based on the dew point,
determine whether a current temperature reaches the threshold value according to changes in the temperature and the humidity, and
apply a control signal to the heating apparatus (280) so that the current temperature does not reach the threshold value.

2. The apparatus of claim 1, wherein, if a difference between the current temperature and the dew point reaches a set temperature, the processor (210) is configured to control the heating apparatus (280).

3. The apparatus of claims 1 or 2, wherein the processor (210) is configured to set the threshold value by adding a temperature constant to the dew point.

4. The apparatus of any one of the previous claims, further comprising a cooling apparatus (270) configured to decrease the internal temperature of the battery pack (100),
wherein, if the current temperature is greater than or equal to a set temperature, the processor (210) is configured to determine that the battery pack (100) is overheated and controls the cooling apparatus (270).

5. The apparatus of any one of the previous claims, wherein the processor (210) is configured to control the internal environment of the battery pack (100) by generating the control signal according to a difference between the current temperature and the threshold value to vary an amount of heating.

6. The apparatus of claim 5, wherein the processor (210) is configured to control:

an output of the heating apparatus (280) to increase as the current temperature approaches the threshold value; and
the output of the heating apparatus (280) to decrease as the difference between the current temperature and the threshold value increases.

7. The apparatus of claim 5, wherein the processor (210) is configured to:

set a duty cycle based on the current temperature, the dew point, and the threshold value;
generate the control signal in a pulse width modulation, PWM, control method according to the duty cycle; and
apply the control signal to the heating apparatus (280).

8. The apparatus of claim 7, wherein the processor (210) is configured to set the duty cycle by:

dividing a value of the threshold value minus the dew point by a value of the current temperature minus the dew point; and
multiplying a divided value by a maximum value of the duty cycle.

9. The apparatus of claim 7 or 8, wherein, if the current temperature reaches the threshold value, the processor (210) is configured to set the duty cycle to a maximum value.

10. A method of controlling an internal environment of a battery pack (100), the method comprising:

measuring, by a temperature sensor (241), an internal temperature of the battery pack (100) and measuring, by a humidity sensor (242), an internal humidity of the battery pack (100);
calculating, by a processor (210), a dew point based on the measured temperature and humidity;
setting, by the processor (210), a threshold value based on the dew point;
determining, by the processor (210), whether a current temperature reaches the threshold value according to changes in the temperature and the humidity; and
controlling, by the processor (210), the internal environment of the battery pack by applying a control signal to the heating apparatus (280) so that the temperature does not reach the threshold value.

11. The method of claim 10, wherein the controlling of the internal environment of the battery pack (100) includes controlling a cooling apparatus (270) by determining that the battery pack (100) is overheated if the current temperature is greater than or equal to a set temperature.

**12.** The method of claim 10 or 11, wherein the controlling of the internal environment of the battery pack (100) includes controlling the internal environment of the battery pack (100) by generating the control signal according to a difference between the current temperature and the threshold value to vary an amount of heating.

**13.** The method of claim 12, wherein, in the controlling of the internal environment of the battery pack (100), the processor (210) controls:

> an output of the heating apparatus (280) to increase as the current temperature approaches the threshold value; and
> the output of the heating apparatus (280) to decrease as the difference between the current temperature and the threshold value increases.

**14.** A method of any one of the previous claims 10 to 13, wherein a plurality of humidity sensors (242) is used to measure the internal humidity of the battery pack (100), wherein the method further comprises the steps of:

> measuring, by a plurality of humidity sensors of an internal environment control apparatus, humidity of each section in a battery pack divided into a plurality of sections;
> receiving, by the internal environment control apparatus, information on the plurality of sections and humidity values of the sections and generating a learning model based on the humidity values for locations of the sections;
> repeatedly performing, by the internal environment control apparatus, learning by reflecting a reward for the locations of the sections and a new state on the basis of the learning model; and
> determining, by the internal environment control apparatus, locations of the humidity sensors according to a result of the learning.

**15.** The method of claim of 14, wherein the generating of the learning model includes:

> defining an agent for determining the location of the humidity sensor and defining a reward function for calculating a reward based on quality of the humidity values of the plurality of sections; and
> generating the learning model based on a deep reinforcement leaning (DRL) for determining an installation location of the humidity sensor.

# FIG. 1A

FIG. 1B

FIG. 2

# FIG. 3

200

# FIG. 4

# FIG. 5

START

MEASURE TEMPERATURE AND HUMIDITY ⎯ S310

CALCULATE DEW POINT AND THRESHOLD VALUE ⎯ S320

HAS THRESHOLD VALUE BEEN REACHED? ⎯ S330

NO

YES

CONTROL HEATING (PWM CONTROL) ⎯ S340

MEASURE TEMPERATURE ⎯ S350

TEMPERATURE CHANGE > SET VALUE? ⎯ S360

NO

YES

STOP HEATING ⎯ S370

END

## FIG. 6

```
                    ( START )
                        |
        +---------------|
        |               v
        |   +-------------------------------+
        |   | MEASURE TEMPERATURE AND HUMIDITY |---- S410
        |   +-------------------------------+
        |               |
        |               v
        |   +-------------------------------+
        |   |     CALCULATE DEW POINT (Td)    |---- S420
        |   +-------------------------------+
        |               |
        |               v
        |   +-------------------------------+
        |   |       SET THRESHOLD VALUE       |---- S430
        |   +-------------------------------+
        |               |                    S440
        |               v
        |       YES  < OVERHEATED STATE? >
        |   S450  <--/
        |   +-----------+      | NO
        |   |  CONTROL  |      |           S460
        |   |  COOLING  |      v
        |   +-----------+  < CURRENT TEMPERATURE >     NO
        |        |          < >= THRESHOLD VALUE? >----+
        |        |     S470       | YES                |
        |        |                v                    v  S480
        |        |   SET PWM DUTY CYCLE        SET PWM DUTY CYCLE
        |        |                             Dutycycle_max
        |        |                |                    |
        |        |                v                    |
        |        |   +-------------------------------+<+
        |        |   |        CONTROL HEATING         |---- S490
        |        |   +-------------------------------+
        |        |               |
        |        |               v
        |  NO    v         < TEMPERATURE CHANGE >
        +--- <   > SET VALUE? >---- S500
                              | YES
                              v
                  +-------------------------------+
                  |     STOP COOLING OR HEATING     |---- S510
                  +-------------------------------+
                              |
                              v
                          (  END  )
```

$$\text{Duty Cycle\_max} \left( \frac{T\_Threshold - Td}{T\_current - Td} \right)$$

FIG. 7

**EUROPEAN SEARCH REPORT**

Application Number

EP 24 17 1932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 975 318 A2 (SIEMENS MOBILITY GMBH [DE]) 30 March 2022 (2022-03-30) | 1-6, 10-13 | INV. B60L58/27 |
| A | * figures 1-7 * <br> * paragraph [0004] - paragraph [0052] * | 7-9,14, 15 | B60L1/00 <br> H01M10/48 <br> H01M10/613 |
| | ----- | | H01M10/63 |
| Y | US 2014/046524 A1 (BROWN CARLTON D [US]) 13 February 2014 (2014-02-13) | 1-6, 10-13 | |
| A | * figures 1-3 * <br> * paragraph [0006] - paragraph [0031] * | 7-9,14, 15 | |
| | ----- | | |
| A | US 10 598 646 B1 (HORNING DAVID C [US] ET AL) 24 March 2020 (2020-03-24) <br> * figures 1-7 * <br> * column 1, line 66 - column 7, line 24 * | 7-9 | |
| | ----- | | |
| A | US 8 566 962 B2 (CORNELIUS JACK C [US]) 29 October 2013 (2013-10-29) <br> * column 3, line 30 - column 16, line 47 * <br> * figures 1-11 * | 7-9 | |
| | ----- | | |
| A | DE 10 2020 213235 A1 (VOLKSWAGEN AG [DE]) 21 April 2022 (2022-04-21) <br> * the whole document * | 1-15 | TECHNICAL FIELDS SEARCHED (IPC) |
| | ----- | | B60L <br> H01M |

The present search report has been drawn up for all claims

| Place of search | Date of completion of the search | Examiner |
|---|---|---|
| Munich | 24 September 2024 | Zimmermann, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 24 17 1932

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | | Publication date | Patent family member(s) | | Publication date |
|---|---|---|---|---|---|
| EP 3975318 | A2 | 30-03-2022 | DE | 102020212186 A1 | 31-03-2022 |
| | | | EP | 3975318 A2 | 30-03-2022 |
| US 2014046524 | A1 | 13-02-2014 | EP | 2883266 A1 | 17-06-2015 |
| | | | US | 2014046524 A1 | 13-02-2014 |
| | | | WO | 2014025667 A1 | 13-02-2014 |
| US 10598646 | B1 | 24-03-2020 | US | 10598646 B1 | 24-03-2020 |
| | | | WO | 2020122995 A1 | 18-06-2020 |
| US 8566962 | B2 | 29-10-2013 | CA | 2864108 A1 | 22-08-2013 |
| | | | CN | 104114133 A | 22-10-2014 |
| | | | DK | 2814433 T3 | 19-11-2018 |
| | | | EP | 2814433 A1 | 24-12-2014 |
| | | | JP | 6013692 B2 | 25-10-2016 |
| | | | JP | 2015511844 A | 23-04-2015 |
| | | | JP | 2017040930 A | 23-02-2017 |
| | | | KR | 20140128402 A | 05-11-2014 |
| | | | US | 2013212765 A1 | 22-08-2013 |
| | | | WO | 2013123262 A1 | 22-08-2013 |
| DE 102020213235 | A1 | 21-04-2022 | CN | 114388916 A | 22-04-2022 |
| | | | DE | 102020213235 A1 | 21-04-2022 |

EPO FORM P0459

For more details about this annex : see Official Journal of the European Patent Office, No. 12/82